(19) **Europäisches Patentamt**

**European Patent Office**

**Office européen des brevets**

(11) **EP 0 615 189 B1**

(12) **EUROPEAN PATENT SPECIFICATION**

(45) Date of publication and mention
of the grant of the patent:
**07.01.1999 Bulletin 1999/01**

(51) Int Cl.$^6$: **G06F 12/02**, G06F 17/30

(21) Application number: **93200662.0**

(22) Date of filing: **09.03.1993**

(54) **Memory storage method and control device**

Speicherungsverfahren und Steuervorrichtung

Procédé de stockage et dispositif de contrôle

(84) Designated Contracting States:
**BE DE ES FR GB IT NL SE**

(43) Date of publication of application:
**14.09.1994 Bulletin 1994/37**

(73) Proprietor: **ALCATEL ALSTHOM COMPAGNIE
GENERALE D'ELECTRICITE
75008 Paris (FR)**

(72) Inventor: **Dobbelaere, Philippe Guillaume
B-8000 Brugge (BE)**

(74) Representative: **Narmon, Gisèle Marie Thérèse
Alcatel Alsthom,
Francis Wellesplein 1
2018 Antwerpen (BE)**

(56) References cited:
- KNUTH 'The Art of Computer Programming, Volume 3: Sorting and Searching' 1973 , ADDISON-WESLEY , READING, US
- FALL JOINT COMPUTER CONFERENCE, PROCEEDINGS 2 November 1986, DALLAS, TEXAS, US pages 601 - 610 MUNRO ET AL. 'Techniques for Collision Resolution in Hash Tables with Open Addressing'
- IBM JOURNAL OF RESEARCH AND DEVELOPMENT vol. 17, no. 2, March 1973, NEW YORK US pages 106 - 114 VAN DER POOL 'Optimum Storage Allocation for a File with Open Addressing'

**Description**

The present invention relates to a memory storage method for storing data cells in memory locations of a memory.

Such a method generally intends to store the data cells in memory in order to be able to find them back afterwards through the use of an address identifying the data cell. This address may for instance be a part of the data cell, whilst the rest of the data cell may contain information searched for. In order to be able to perform a fast search in memory one generally does not simply store successively arriving data cells in successive memory locations of the memory since this requires a so-called sequential search to find back any data cell, thereby introducing a relatively long search time. Such sequential search techniques are described e.g. in the book 'The art of computer programming, Volume 3 / Sorting and Searching' by D. E. Knuth, Addison-Wesley, 1973, pp. 393 - 402. Instead, in order to decrease the search time one may apply a so-called search and insertion algorithm, which is an algorithm based on a sorted list of data cells. This sorted list may be obtained by reordering the data cells each time a new data cell is stored. However, this reordering operation introduces a significant time delay each time a data cell is stored. Another possibility is to provide a so-called linked list indicating the order of the stored data cells. In this case, the time delay introduced each time a data cell is stored is somewhat diminished with respect to the previous solution as no actual reordering of stored data cells occurs, but additional memory is needed to store the linked list. In both cases so-called binary search and similar techniques with a reduced search time may be applied. The latter techniques and other ones for storing data cells are described e.g. on pp. 80 - 102 of the already mentioned book, whereas the latter search techniques are described e.g. on pp. 406 - 419 (and following) thereof.

Another storage allocation is described in "IBM Journal of research and development, vol. 17 n° 2 , March 1973, New York US, pages 106 - 114 : Van Der Pool : Optimum allocation for a File with Open Addressing". This document discloses a method of locating stored records in a storage that is divided into physical blocks called buckets. A number of records of a file cannot be stored in the bucket to which they were assigned. Several methods can be used to store these overflow records. An overflow record from a bucket with address a is stored in the bucket with address a+d, where d is the smallest integer that identifies a nonful bucket with address greater than a.

An object of the present invention is to provide a different method of the above known type for storing data cells whereby the memory is divided into groups of memory locations, which allows a fast storage and a low search time, which avoids the need of a sort and insertion algorithm or a linked list and which solves the problem of more data cells being offered for storage in a group than the number of memory locations available therein.

According to the invention, this object is achieved due to the fact that said memory locations are grouped in predetermined distinct groups having respective group addresses which are ordered in a cyclic order, that said data cells are identified by respective cell identifiers to which respective ones of said group addresses correspond, and that said method includes for each data cell to be stored the steps of:

- allocating the corresponding one of said group addresses to the cell identifier of said data cell;
- allocating to said groups in said cyclic order and starting with the one group having said one group address respective predetermined group filling levels; and
- performing an iterative investigation process on said groups in said cyclic order and starting with said one group each phase of said process comprising the steps of comparing an actual filling level of the group investigated with the predetermined group filling level allocated thereto, and deciding in function of the result of said comparison whether said data cell has to be stored in a free memory location of this group or a following group has to be investigated during a following phase of said process.

The memory locations being grouped in predetermined distinct groups with respective group addresses and the group address corresponding to the cell identifiers of data cells to be stored, allows a fast storage and a reduced search time. Indeed, although no sort and insertion algorithm is applied nor a linked list is provided, the memory location a data cell is stored in can still be found back fast in memory by allocating the corresponding group address to its cell identifier and by searching for the data cell in the group with the latter group address. The same allocation process of a group address to a cell identifier allows for a fast storage.

However, due to the groups being predetermined, more data cells may be offered for storage in a group than the number of memory locations available therein. A data cell offered for storage to a group which is already completely filled is stored in a following group, which increases the search time for such a data cell. However, through an appropriate choice of the predetermined series of predetermined group filling levels one may influence the distribution of data cells offered for storage in a group over that group and subsequent groups in such a way that this increase in search time is minimized. Indeed, the data cells stored in a specific group are mostly data cells to the cell identifiers of which the group address of that specific group is allocated and some data cells to which the group address of a previous group is allocated for which however the comparison indicates that a following group has to be investigated. Thus, by lowering the predetermined group filling levels, and more specifically the first one allocated to the one group corresponding to the cell identifier of the data cell to be stored, less data cells whose cell identifiers correspond to that one group are allowed to be stored therein, but more memory locations are left free to store data cells in whose cell identifiers correspond to previous groups. Thereby, the probability that a data cell is stored in a group which is nearby according to the cyclic order is increased and the search time is lowered.

A further characteristic of the present invention is that said iterative process is finished when either said free memory location is found or a predetermined number of groups is investigated, said predetermined number being equal to the number of said predetermined group filling levels.

In this way, one prevents cells which would have to be stored in a group which according to the cyclic order is far apart from the group corresponding to its cell identifier from being stored in the memory. Thus, the search for a data cell is prevented from being extended beyond said predetermined number of groups thereby reducing the search time for not stored data cells.

Another characteristic of the present invention is that said data cell is stored in said free memory location when said actual filling level is less than said predetermined group filling level, whereas otherwise a following group is investigated.

In this way, when the number of data cells stored in a specific group is larger than or equal to the first filling level of the predetermined series, the probability that a data cell is stored in that specific group is in fact the probability that to the cell identifier of that data cell the group address of a previous group is allocated which, together with the next groups until the mentioned specific group, is too filled with data cells according to the predetermined series whilst said specific group is not. On the other hand, when the number of data cells stored in a specific group is less than the first filling level of the predetermined series, the probability that a data cell is stored in that specific group is the probability that the group address of said specific group is allocated to the cell identifier of that data cell or that the group address of a previous group as above is allocated thereto. Thus, the latter probability is larger than the previous one. As a consequence, the probability that a group is completely filled with data cells decreases when the first predetermined group filling level of the predetermined series decreases, which is moreover also the case for a decrease of any further predetermined group filling level of the predetermined series.

Yet another characteristic feature of the present method is that said groups each have a same number of memory locations, and that said predetermined group filling levels form a monotonic increasing sequence of integer values.

In this way, a data cell which can not be stored in the group allocated to its cell identifier, has a probability to be stored in a next group which increases or stays constant as following groups are considered, thereby causing data cells with the same allocated group to be less dispersed over different groups.

Still another characteristic of the present method is that a first predetermined group filling level is less than said same number, whereas its second and next predetermined group filling levels are equal to said same number.

Thus, until the actual filling level of a group equals the first predetermined group filling level, each group is filled with data cells to whose cell identifier the group address of the latter group is allocated or with data cells to whose cell identifier the group address of a previous group is allocated. Beyond this level the group is only filled with data cells to whose cell identifier the group address of a previous group is allocated. Thereby, a simple method is provided allowing for data cells with like cell identifiers to be less dispersed over different groups.

In yet another embodiment of the present method, in each of said groups the data cells are ordered according to their cell identifier, and that upon said data cell being stored in said free memory location, the data cells of the corresponding group are again ordered according to their cell identifiers.

In this way, an additional delay before actually storing the data cell is introduced, but fast binary search techniques as already mentioned above can be applied to locate a data cell in a group. This implementation is therefore recommended when the number of memory locations of the groups is high and when a lot of data cells will be stored therein.

Yet a further characteristic feature of the present method is that a linked list is associated to each of said groups indicating the numerical order of the data cells stored therein, and that said linked list is updated upon said data cell being stored in said free memory location.

With respect to the previous embodiment, the delay before storing the data cell is somewhat reduced since no actual moving of the data cells in the group is to be performed, but additional memory for storing the linked list is required. Therefore, this implementation is recommended when some overhead of memory is available or when the time for reordering the data cells in the group becomes too high because the groups contain too much memory locations filled with data cells.

The invention also relates to a memory storage control device for a memory and operating according to the method of any of the previous claims, characterized in that said device includes:

- a group order means indicating said cyclic order,
- an identifier translator translating the cell identifiers of said data cells into said group addresses thereby allocating said group addresses to said data cells,
- a group register storing said group address of the group investigated,
- a vector means which provides said predetermined group filling level allocated to said group investigated at its output,

- a measuring means to which said group address of said group investigated is input and which in response thereto provides said actual filling level,

- a comparator means to which said group filling level allocated to said group investigated and said actual filling level are input and an output of which indicates whether said integer number is greater than said number of data cells or not,

- an incrementing means which under the control of said comparator means output adapts the contents of said group register,

- a storage means controlled by said comparator output for storing said data cell.

A further characteristic feature of the present memory storage control device is that said identifier translator includes a memory device in which the group addresses of said groups are stored.

In this way, a fast translation of the cell identifier into a group address is performed, e.g. when the cell identifier or part thereof constitutes an address for the memory device.

In another embodiment of the present memory storage control device, said identifier translator includes a processing means performing a predetermined function on said cell identifier in order to obtain said group address.

Thereby, the identifier translator allows in a flexible way for the allocation of the group addresses to the cell identifiers.

To be noted that the only prerequisite for the predetermined function is that its value must for all possible cell identifiers be one of the possible group addresses, the only limitation thus being that this function must not have more possible values than the number of possible group addresses, viz. n. The predetermined function can be software as well as hardware implemented, a software implementation providing a flexibility advantage whereas a hardware implementation provides a search time advantage. The processing means can also be combined with the above memory device.

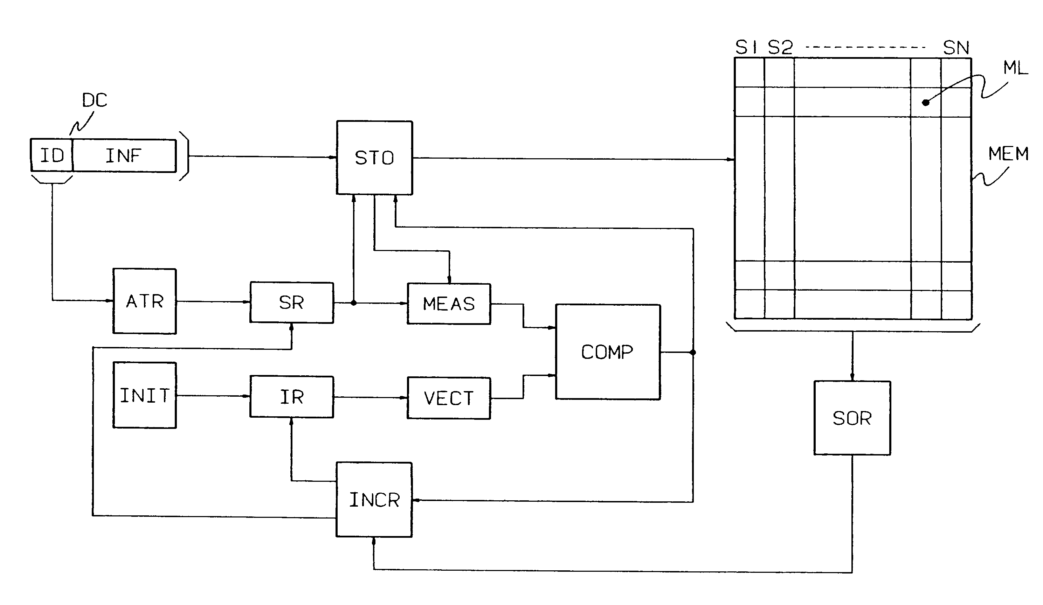

The above mentioned and other objects and features of the invention will become more apparent and the invention itself will be best understood by referring to the following description of an embodiment taken in conjunction with the accompanying drawing which shows a memory storage control device according to the invention and operating according to a memory storage method according to the invention.

The memory storage control device shown in the drawing operates according to a memory storage method which is first described hereinafter. The purpose of this method is to store data cells such as DC in a memory MEM. This data cell DC is shown in the drawing and has a cell identifier ID identifying it and a data part INF containing functional data. ID and INF may for instance be constituted by two addresses of a same resource and according to two different communication protocols, e. g. a so-called Ethernet address as standardized by IEEE 802.3 and a so-called SMDS (Switched Multimegabit Data Services) address compliant with the CCITT recommendations E164. This data cell is stored in memory in order to afterwards be able to translate the first of the addresses into the second one by searching the data cell in memory.

The memory MEM comprises N groups S1 to SN each having a same number of memory locations ML, which is generally a power of two because of resulting group addressing advantages. When MEM is for instance constituted by a so-called hard-disk of 100 megabyte with groups of 512 bytes each, and the data cells DC to be stored each contain 14 bytes, i.e. a 6 byte Ethernet address and an 8 byte SMDS address, then, in order to be able to easily address the different groups and memory locations, $2^{17}$ groups identified by a 17-bit address and with 32 memory locations ML each are considered to store the data cells DC in.

To be noted that this means that the complete storage capability neither of MEM nor of each group is used as only $2^{17}$ groups on a total of $100 \times 2^{20}/512 = 2^{17} \times 25/16$ groups are used and as only $32 \times 14 = 448$ of the 512 bytes per group are used which constitutes an overhead of 2 bytes per data cell.

The above groups S1 to SN each have a group address SA1 to SAN and the identifier ID of each data cell may be converted to such a group address.

The present memory storage method provides a solution for the problem of group overflow, i.e. the problem that a data cell DC can not be stored in a group because no free memory locations ML are available therein. This data cell DC is then stored in one of the following groups. For that purpose the groups are cyclically ordered so that to each group a next group is associated. A feasible implementation of such ordering is to associate to a group with group address 'A' the group with group address 'A + 1' as its next group and to the group with the highest possible group address ($2^{17}$ - 1 for the above mentioned example) the group with the lowest possible group address (0) as its next group.

In the method, use is made of a group variable SV and a filling level variable PV. The group variable SV may have each of N (= $2^{17}$) values equal to the group addresses SA1 to SAN and the filling level variable PV may have each of a series of values PV1, PV2, ... equal to maximum predetermined group filling levels for the groups. In the present embodiment these values PV1, PV2, ... form a monotonically increasing series and in a more specific case they simply are a series of identical numbers equal to the number of memory locations in a group, except for the first value PV1 which is less than the latter number. In the above example PV1, PV2, ... are for instance given by : 28, 32, 32, ..., 32, ...

When the above data cell DC is to be stored in the memory MEM, first a group address SAM corresponding to its cell identifier ID is allocated thereto. SAM is then used as an initializing value for the group variable SV, whilst the filling level variable PV is initialized to PV1 and thus allocated to the group indicated by the group variable SV = SAM. Then the actual filling level, i.e. the number M of data cells already stored in the group with address SV = SAM is compared to PV1. When M is smaller than PV1, then the data cell DC is stored in a memory location of the group with address SV = SAM, , whereas when it is larger than or equal to PV1 it is tried to be stored in the next group, i.e. the group with group address SAM + 1. PV is then made equal to PV2 and SV to SAM + 1, thereby allocating PV2 to SAM + 1. A similar procedure as described in relation to SAM and PV1 is followed for the groups in cyclic order until finally a group is found in a free memory location of which the data cell DC is stored.

The number of groups to which the above procedure is applied is limited to a predetermined number. In this way, one prevents cells which would have to be stored in a group which is far apart from the group corresponding to its cell identifier from being stored, thus also preventing the search for a data cell to extend beyond said predetermined number of groups and reducing the search time for not stored data cells.

To be noted that when the above predetermined number were not considered, one would eventually find such a free memory location unless all groups of MEM were completely filled with data cells.

In this way a group is initially filled with data cells whose cell identifier corresponds to that group or to a previous group until it contains as many data cells as indicated by PV1. The remaining memory locations of this group may then only be filled with data cells which were offered to be stored in previous groups but which were not allowed to because these groups already contained a number of data cells larger then or equal to the corresponding group filling level of the predetermined series. Thereby, one obtains that when a data cell DC can not be stored in a group it will most probably be stored in the immediately next group or in another group which is nearby when considered in group order. As a consequence, the data cells DC are not considerably dispersed over different groups of the memory MEM, but rather stored in memory locations of adjacent groups.

The memory storage control device shown in the drawing operates according to the above described method. It includes the already mentioned memory MEM with groups S1 to SN each having the same number of memory locations ML for storing data cells such as DC. In the already mentioned example one has a 100 megabyte memory, $2^{17}$ groups S1 to SN indicated by 17-bit group addresses SA1 to SAN, 32 memory locations per group, 14 bytes per data cell, 6-byte ID and 8-byte INF. The cell identifier ID of such a data cell DC is applied to the address translator ATR which in response provides the address SAM of the group SM corresponding to ID. An easy way of implementing such an address translator is to simply take 17 bits, e.g. the 17 least significant bits, of the 6-byte ID as a group address. However, this only constitutes a good solution when these 17 bits provide a constant distribution of the data cells over the different groups. Otherwise, some groups will be full whilst others are still empty, thereby distributing data cells with a same address translator output over different groups even when the memory is only slightly filled with data cells. In order to avoid such a distribution and when the distribution of ID over its possible values is known, one may determine a function $f$ to be applied to ID and which has as a result a 17-bit address with a uniform distribution over all possible 17-bit group addresses. In a first approximation this function is given by the following equation wherein $p_{ID}(x)$ is the distribution function of ID over all possible values of ID, i.e. the probability $P(x<ID<x+dx)$ that ID lies between $x$ and $x + dx$ equals $p_{ID}(x)\cdot dx$, $p_{f(ID)}(y)$ is the distribution function of $f$(ID) over all possible values of $f$(ID), i.e. the probability $P(y<f(ID)<y+dy)$ that $f$(ID) lies between $y$ and $y + dy$ equals $p_{f(ID)}(y)\cdot dy$, $K$ and $C$ are constants, and $lv$ is the lowest possible value of ID, hence $lv$ equals zero.

$$f(x) \;=\; \frac{1}{K}\int_{lv}^{x} p_{ID}(u)\,du \;+\; C$$

This function $f$ provides a uniform distribution of $f$(ID) over all possible values of $f$(ID) which may be shown as follows :

$$p_{f(ID)}(y) = \frac{P(y < f(ID) < y+dy)}{dy} = \frac{P(x<ID<x+dx)}{f'(x)dx} = K$$

Such a function $f$ can be implemented in a memory device which translates a number of bits of ID into the 17-bit address. This solution is easy to implement but does not offer a great flexibility in the choice of functions $f$. Another possibility is to use a processing unit in which the function is either hardware or software implemented. A hardware implementation provides a speed advantage whereas a software implementation gives a still increased flexibility in the choice of the function $f$ and allows for the function to be adapted for instance to changed data cell distribution characteristics. A combined hardware-software implementation is also possible.

However, in many occasions the distribution of the cell identifiers ID over their possible values is not or not exactly known and may moreover change in time. In that case the above solution is only applicable in that an approximate best function f might be determined. A better solution is then obtained by applying a so-called hash function which takes on at most $2^{17}$ different values to ID. Such hash functions are described e.g.:

a) - in the already mentioned book by Knuth on pp. 506 - 542. They merely chop up or randomise the distribution of ID, thereby providing a more constant distribution of the group addresses over the possible group addresses; and

b) in the document "Fall Joint Computer Conference, Proceedings 2 November 1986,Dallas, Texas, pages 601 - 610 : Munro Et Al "Resolution in Hash Tables with Open Addressing". This document discloses that a hashing scheme could determine solely from the identification of a record, called the record key, the exact location in which the record is stored. Since a hash function essentially maps keys to locations at random, collision may occur. There are two ways of handling collisions : chaining and open addressing. While chaining needs a linked list, for each location, of the records that hash to that location, the idea of open addressing includes that when a collision occurs, one of the colliding records is selected to keep the location, while the other one continues probing until inserted.

The group address SAM provided by ATR is applied to a group register SR as an initializing value therefor. SR contains the value of the group variable SV and provides it to a measuring unit MEAS. MEAS then determines the actual filling level, i.e. the number of data cells already stored in the group with group address SV and provides this actual filling level to a comparator COMP. MEAS may for instance be implemented as a set of $2^{17}$ counters, one for each group. These counters must keep track of the filling levels of the different groups which implies that the counter associated to a group is to be incremented with one when a data cell DC is stored in that group, and, if the possibility of deleting data cells is provided for instance because they contain a no longer used pair of addresses, the counter is to be decremented with one if a data cell DC is deleted from that group. Since, as indicated above, an overhead of two bytes per group exists and the maximum number of data cells in a group is 32 which can be presented by 5 bits, one of these two bytes can be used as a counter for that group. If this overhead would not be available an additional memory of $2^{17} = 131.072$ bytes (being 0.2 % of the capacity of MEM used to store the data cells) would be needed.

A value INIT equal to one is applied by a like named memory cell INIT to an integer variable register IR for initializing to 1 an integer variable i stored therein. This value INIT may also be a fixed code in hardware. The latter integer variable i is supplied to a vector unit VECT storing the maximum group filling levels PV1, PV2, ... VECT can for instance be implemented as a small register with a number of memory locations containing different maximum group filling levels combined with a small integer translator which translates the running integer variable i into an address for the register which in response provides a value of the filling level variable PV.

In this way, when PV1, PV2, ... is given by: 28, 30, 30, 30, 32, 32, ..., 32, ..., then VECT can be implemented as a three-byte register containing the three integer values 28, 30 and 32, and an integer translator addressing the first register byte containing 28 when i equals one, the second when i equals 2, 3 or 4, and the third when i is larger than 4. The more different values PV contains, the larger the register, and the less harmony in PV the more complex the integer translator. Thus, the above mentioned example where only the first element of PV equals 28 whilst the other ones all equal 32 can be implemented in a simple way.

The output of VECT, i.e. the value of PV, is then supplied to the comparator COMP where it is compared with the actual filling level provided by MEAS. The result of this comparison is output from COMP as a binary value and indicates whether the actual filling level of the group with group address SV is larger than the maximum group filling level indicated by the output of VECT. When the actual filling level is larger than or equal to the maximum group filling level then the output signal of COMP is a binary one, otherwise it is a binary zero. This output is applied to an incrementing circuit INCR as well as to a storage unit STO. When the output signal is a binary one, STO is disabled and INCR increments the contents of IR with one and changes the contents of SR to the next group associated to its present value. When the cyclic ordering of the groups corresponds to the order of their respective group addresses as described above, then the contents of SR merely is also to be incremented with one, such increment of an all-one value, for the last group, resulting in an all-zero value, indicative of the first group. In this case, a group order unit SOR indicating the cyclic order of the groups is not needed. In case of a more intricate order of the groups this order may be indicated by the group order unit SOR.

Then the whole procedure of determining the actual filling level of the group with group address SV and a maximum group filling level and of comparing these filling levels, as well as the incrementing of IR and SR is repeated until the output of COMP is no longer one but zero. Then INCR is disabled by COMP and the storage unit STO is enabled by COMP to store the data cell DC in the group with group address SV as indicated by SR and also provided to STO. The data cell DC can be stored in any free memory location of the group with group address SV in which case a sequential search is needed later on for searching a data cell in the group. In order to reduce the search time one may sort, i.e. order according to their cell identifiers, the data cells stored in a group each time a new data cell is stored therein. Another possibility is to store a so-called linked list for each group indicating the numerical order of the data cells stored therein, and to adapt this linked list each time a new data cell is stored. In both the latter cases so-called binary search techniques can be applied for searching a data cell in a group which allow for a low search time. The linked list can be stored in the unused part of the memory referred to above.

To be noted that STO also provides information to the measuring unit MEAS concerning the storage and deletion of data cells from the memory MEM.

While the principles of the invention have been described above in connection with specific apparatus, it is to be clearly understood that this description is made only by way of example and not as a limitation on the scope of the invention.

**Claims**

1.  Memory storage method for storing data cells (DC) in memory locations (ML) of a memory (MEM), said memory locations (ML) being grouped in predetermined distinct groups (S1/SN) having respective group addresses (SA1/SAN), said data cells (DC) being identified by respective cell identifiers (ID) to which respective ones of said group addresses correspond, characterized in that said groups (S1/SN) are ordered in a cyclic order and that said method includes for each data cell (DC) to be stored the steps of:

    -   allocating the corresponding one (SAM) of said group addresses (SA1/SAN) to the cell identifier (ID) of said data cell (DC);
    -   allocating to said groups (S1/SN) in said cyclic order and starting with the one group (SM) having said one group address (SAM) respective predetermined group filling levels (PV1,PV2,...); and
    -   performing an iterative investigation process on said groups in said cyclic order and starting with said one group (SM), each phase of said process comprising the steps of:

        a) comparing an actual filling level of the group investigated with the predetermined group filling level allocated thereto, and
        b) deciding in function of the result of said comparison whether said data cell has to be stored in a free memory location of this group or whether a following group has to be investigated during a following phase of said process, said predetermined group filling levels being determined in such a way as to decrease the probability upon storage of said data cell (DC), whose cell identifier (ID) corresponds to said one group (SM) having said one group address (SAM), in a free memory location of said one group (SM).

2.  Method according to claim 1, characterized in that said iterative process is finished when either said free memory location is found or a predetermined number of groups is investigated, said predetermined number being equal to the number of said predetermined group filling levels.

3.  Method according to claim 1, characterized in that said data cell (DC) is stored in said free memory location when said actual filling level is less than said predetermined group filling level, whereas otherwise a following group is investigated.

4.  Method according to claim 3, characterized in that said groups (S1/SN) each have a same number (32) of memory locations (ML), and that said predetermined group filling levels (PV1,PV2,...) form a monotonic increasing sequence of integer values.

5.  Method according to claim 4, characterized in that a first predetermined group filling level (PV1) is less than said same number (32), whereas its second and next predetermined group filling levels (PV2,...) are equal to said same number (32).

6.  Method according to claim 1, characterized in that in each of said groups (S1/SN) the data cells are ordered according to their cell identifier, and that upon said data cell (DC) being stored in said free memory location, the data cells of the corresponding group are again ordered according to their cell identifiers.

7.  Method according to claim 1, characterized in that a linked list is associated to each of said groups (S1/SN) indicating the numerical order of the data cells stored therein, and that said linked list is updated upon said data cell (DC) being stored in said free memory location.

8.  A memory storage control device for storing data cells (DC) in memory locations (ML) of a memory (MEM) wherein said memory locations are grouped in predetermined distinct groups (S1/SN) having respective group addresses (SA1/SAN), said data cells (DC) identified by respective cell identifiers (ID) to which respective ones of said group addresses correspond, characterized in that said memory storage control device includes :

    -   group order means (SOR) to indicate a cyclic order to said groups (S1/SN); and in order to store a data cell (DC) further includes :
    -   first allocating means (ATR) to allocate a corresponding one (SAM) of said group addresses (SA1/SAN) to the cell identifier (ID) of said data cell (DC) and
    -   second allocating means to allocate to said groups (S1/SN) in said cyclic order, starting with said group (SM) having said corresponding one group address (SAM), respective predetermined filling levels (PV1, PV2, ...); and further includes in order to perform an iterative investigation process on said groups in said cyclic order thereby starting with said one group (SM):

- comparator means (COMP) to compare an actual filling level of an investigated group with its predetermined group filling level, thereby providing a result, and to decide in function of said result whether said data cell has to be stored in a free memory location of this group or whether a following group has to be investigated during a following phase of said process; and

that said predetermined group filling levels is determined in such a way as to decrease the probability upon storage of said data cell (DC), whose cell identifier (ID) corresponds to said one group (SM) having said one group address (SAM), in a free memory location of said one group (SM).

9. The memory storage control device according to claim 8, characterized in that said first allocating means (ATR) is constituted by an identifier translator (ATR) to translate the cell identifiers of said data cells into said group addresses.

10. The memory storage control device according to claim 8, characterized in that said memory storage control device further includes:

- a group register (SR) to store said group address of the group investigated; and
- a vector means (VECT) to provide said predetermined group filling level allocated to said group investigated at its output; and
- a measuring means (MEAS) whereto said group address of said group investigated is input and to provide said actual filling level of said group investigated, and

that said comparator means (COMP) indicates whether said predetermined group filling level is greater than said actual group filling level or not; and that said memory storage control device further includes : ,

- incrementing means (INCR) to adapt under the control of said comparator means output the contents of said group register (SR); and
- storage means (STO) to store under the control of said comparator output said data cell (DC).

11. Memory storage control device according to claim 9, characterized in that said identifier translator (ATR) includes a memory device in which the group addresses of said groups (S1/SN) are stored.

12. Memory storage control device according to claim 9, characterized in that said identifier translator (ATR) includes a processing means performing a predetermined function on said cell identifier (ID) in order to obtain said group address.

## Patentansprüche

1. Speicherungsverfahren zum Speichern von Datenzellen (DC) in Speicherplätzen (ML) eines Speichers (MEM), wobei die Speicherplätze (ML) in vorbestimmte einzelne Gruppen (SI/SN) mit jeweiligen Gruppenadressen (SA1/SAN) gruppiert sind, wobei die Datenzellen (DC) durch jeweilige Zellkennungen (ID) identifiziert sind, denen jeweils einzelne der Gruppenadressen entsprechen, dadurch gekennzeichnet, daß die Gruppen (SI/SN) in einer zyklischen Reihenfolge geordnet sind, und daß das Verfahren für jede zu speichernde Datenzelle (DC) die Schritte umfaßt:

- Zuteilen der entsprechenden einen (SAM) der Gruppenadressen (SA1/SAN) zu der Zellkennung (ID) der Datenzelle (DC);
- Zuteilen jeweiliger vorbestimmter Gruppenfüllstände (PVI, PV2, ...) in der zyklischen Reihenfolge und beginnend mit der einen Gruppe (SM) mit der einen Gruppenadresse (SAM) zu den Gruppen (SI/SN); und
- Durchführen eines iterativen Untersuchungsprozesses in der zyklischen Reihenfolge und beginnend mit der einen Gruppe (SM) an den Gruppen, wobei jede Phase des Prozesses die Schritte umfaßt:

    a) Vergleichen eines tatsächlichen Füllstandes der untersuchten Gruppe mit dem ihr zugeteilten vorbestimmten Gruppenfüllstand, und
    b) Entscheiden als Funktion des Ergebnisses des Vergleichs, ob die Datenzelle in einem freien Speicherplatz dieser Gruppe gespeichert werden muß oder ob eine folgende Gruppe während einer folgenden Phase des Prozesses untersucht werden muß, wobei die vorbestimmten Gruppenfüllstände so bestimmt sind, um die Wahrscheinlichkeit einer Speicherung der Datenzelle (DC), deren Zellkennung (ID) der einen Gruppe (SM) mit der einen Gruppenadresse (SAM) entspricht, in einen freien Speicherplatz der einen Gruppe (SM) zu verringern.

2. Verfahren nach Anspruch 1, dadurch gekennzeichnet, daß der iterative Prozeß beendet wird, wenn entweder der freie Speicherplatz gefunden wurde oder eine vorbestimmte Anzahl von Gruppen untersucht wurde, wobei die vorbestimmte Anzahl gleich der Anzahl der vorbestimmten Gruppenfüllstände ist.

3. Verfahren nach Anspruch 1, dadurch gekennzeichnet, daß die Datenzelle (DC) in dem freien Speicherplatz gespeichert wird, wenn der tatsächliche Füllstand kleiner als der vorbestimmte Gruppenfüllstand ist, während andernfalls eine folgende Gruppe untersucht wird.

4. Verfahren nach Anspruch 3, dadurch gekennzeichnet, daß die Gruppen (SI/SN) jeweils eine gleiche Anzahl (32) von Speicherplätzen (ML) aufweisen, und daß die vorbestimmten Gruppenfüllstände (PV1, PV2, ...) eine monoton zunehmende Abfolge von ganzzahligen Werten bilden.

5. Verfahren nach Anspruch 4, dadurch gekennzeichnet, daß ein erster vorbestimmter Gruppenfüllstand (PV1) kleiner als die genannte gleiche Anzahl (32) ist, während ihre zweiten und nächsten vorbestimmten Gruppenfüllstände (PV2, ...) gleich der genannten gleichen Anzahl (32) sind.

6. Verfahren nach Anspruch 1, dadurch gekennzeichnet, daß in jeder der Gruppen (SI/SN) die Datenzellen nach ihrer Zellkennung geordnet werden, und daß beim Speichern der Datenzelle (DC) in dem freien Speicherplatz die Datenzellen der entsprechenden Gruppe von neuem gemäß ihren Zellkennungen geordnet werden.

7. Verfahren nach Anspruch 1, dadurch gekennzeichnet, daß eine verbundene Liste jeder der Gruppen (SI/SN) zugeordnet ist, wobei die verbundene Liste die numerische Reihenfolge der darin gespeicherten Datenzellen angibt, und daß die verbundene Liste beim Speichern der Datenzelle (DC) in dem freien Speicherbereich aktualisiert wird.

8. Speichersteuervorrichtung zum Speichern von Datenzellen (DC) in Speicherplätzen (ML) eines Speichers (MEM), in dem die Speicherplätze in vorbestimmten einzelnen Gruppen (S1/SN) mit jeweiligen Gruppenadressen (SA1/SAN) gruppiert sind, wobei die Datenzellen (DC) durch jeweilige Zellkennungen (ID), denen jeweilige einzelne der Gruppenadressen entsprechen, identifiziert sind, dadurch gekennzeichnet, daß die Speichersteuervorrichtung umfaßt:

- Gruppenordnungsmittel (SOR) zur Angabe einer zyklischen Reihenfolge der Gruppen (S1/SN);

und zur Speicherung einer Datenzelle (DC) weiter enthält:

- erste Zuteilungsmittel (ATR), um eine entsprechende einzelne (SAM) der Gruppenadressen (SA1/SAN) der Zellkennung (ID) der Datenzelle (DC) zuzuteilen, und
- zweite Zuteilungsmittel, um den Gruppen (S1/SN) in der zyklischen Reihenfolge beginnend mit der Gruppe (SM) mit der entsprechenden einen Gruppenadresse (SAM) jeweilige vorbestimmte Füllstände (PV1, PV2, ... ) zuzuteilen; und, um einen iterativen Untersuchungsprozeß an den Gruppen in der zyklischen Reihenfolge, dabei beginnend mit der einen Gruppe (SM), durchzuführen, ferner enthält:
- Vergleichsmittel (COMP), um einen tatsächlichen Füllstand einer untersuchten Gruppe mit ihrem vorbestimmten Gruppenfüllstand zu vergleichen und dabei ein Ergebnis zu liefern, und um als Funktion des Ergebnisses zu entscheiden, ob die Datenzelle in einem freien Speicherplatz dieser Gruppe gespeichert werden muß, oder ob eine folgende Gruppe während einer folgenden Phase des Prozesses untersucht werden muß; und

daß die vorbestimmten Gruppenfüllstände in solch einer Weise bestimmt sind, um die Wahrscheinlichkeit einer Speicherung der Datenzelle (DC), deren Zellkennung (ID) der einen Gruppe (SM) mit der einen Gruppenadresse (SAM) entpricht, in einem freien Speicherplatz der einen Gruppe (SM) zu verringern.

9. Speichersteuervorrichtung nach Anspruch 8, dadurch gekennzeichnet, daß das erste Zuteilungsmittel (ATR) von einem Kennungsübersetzer (ATR) gebildet ist, um die Zellkennungen der Datenzellen in die Gruppenadressen zu übersetzen.

10. Speichersteuervorrichtung nach Anspruch 8, dadurch gekennzeichnet, daß die Speichersteuervorrichtung weiter enthält:

- ein Gruppenregister (SR), um die Gruppenadressen der untersuchten Gruppen zu speichern; und
- ein Vektormittel (VECT), um den der untersuchten Gruppe zugeteilten vorbestimmten Gruppenfüllstand als seinen Ausgang zu liefern; und
- ein Meßmittel (MEAS), dem die Gruppenadresse der untersuchten Gruppe eingegeben wird, um den tatsächlichen Füllstand der untersuchten Gruppe bereit zu stellen, und

daß das Vergleichsmittel (COMP) angibt, ob der vorbestimmte Gruppenfüllstand größer als der tatsächliche Gruppenfüllstand ist oder nicht; und daß die Speichersteuervorrichtung ferner enthält:

- Inkrementiermittel (INCR), um unter der Steuerung des Vergleichsmittelausgangs die Inhalte des Gruppenregisters (SR) anzupassen; und
- Speichermittel (STO), um unter der Steuerung des Vergleicherausgangs die Datenzelle (DC) zu speichern.

11. Speichersteuervorrichtung nach Anspruch 9, dadurch gekennzeichnet, daß der Kennungsübersetzer (ATR) eine Speichervorrichtung enthält, in der die Gruppenadressen der Gruppen (SI/SN) gespeichert werden.

12. Speichersteuervorrichtung nach Anspruch 9, dadurch gekennzeichnet, daß der Kennungsübersetzer (ATR) ein Verarbeitungsmittel enthält, das eine vorbestimmte Funktion an der Zellkennung (ID) ausführt, um die Gruppenadresse zu erhalten.

**Revendications**

1. Procédé de stockage en mémoire pour stocker des cellules de données (DC) dans des positions mémoire (ML) d'une mémoire (MEM), lesdites positions mémoire (ML) étant regroupées dans des groupes distincts prédéterminés (SI/SN) avec des adresses de groupe respectives (SA1/SAN), lesdites cellules de données (DC) étant identifiées par des identificateurs de cellule respectifs (ID) auxquels correspondent des adresses respectives desdites adresses de groupe, caractérisé en ce que lesdits groupes (S1/SN) sont classés dans un ordre cyclique et en ce que ledit procédé inclut, pour chaque cellule de données (DC) à stocker, les étapes consistant à :

- allouer l'adresse correspondante (SAM) desdites adresses de groupe (SA1/SAN) à l'identificateur de cellule (ID) de ladite cellule de données (DC);
- allouer auxdits groupes (S1/SN) dans ledit ordre cyclique, et en commençant par le seul groupe (SM) avec ladite seule adresse de groupe (SAM), des niveaux prédéterminés respectifs de remplissage de groupe (PV1, PV2, ...); et
- effectuer un processus itératif d'étude sur lesdits groupes dans ledit ordre cyclique, et en commençant par ledit seul groupe (SM), chaque phase dudit processus comprenant les étapes consistant à :

  a) comparer un niveau effectif de remplissage du groupe étudié au niveau prédéterminé de remplissage de groupe alloué à celui-ci, et

  b) décider en fonction du résultat de ladite comparaison si ladite cellule de données doit être stockée dans une position mémoire libre de ce groupe ou si un groupe suivant doit être étudié au cours d'une phase suivante dudit processus, lesdits niveaux prédéterminés de remplissage de groupe étant déterminés de façon à diminuer la probabilité après le stockage de ladite cellule de données (DC), dont l'identificateur de cellule (ID) correspond audit seul groupe (SM) avec ladite seule adresse de groupe (SAM), dans une position mémoire libre dudit seul groupe (SM).

2. Procédé selon la revendication 1, caractérisé en ce que ledit processus itératif est terminé quand soit ladite position mémoire libre est trouvée soit un nombre prédéterminé de groupes est étudié, ledit nombre prédéterminé étant égal au nombre desdits niveaux prédéterminés de remplissage de groupe.

3. Procédé selon la revendication 1, caractérisé en ce que ladite cellule de données (DC) est stockée dans ladite position mémoire libre quand le niveau effectif de remplissage est inférieur audit niveau prédéterminé de remplissage de groupe tandis que, dans le cas contraire, un groupe suivant est étudié.

4. Procédé selon la revendication 3, caractérisé en ce que lesdits groupes (S1/SN) ont chacun le même nombre (32) de positions mémoire (ML), et en ce que lesdits niveaux prédéterminés de remplissage de groupe (PV1, PV2, ...) forment une séquence de valeurs entières uniformément croissante.

5. Procédé selon la revendication 4, caractérisé en ce qu'un premier niveau prédéterminé de remplissage de groupe (PV1) est inférieur audit même nombre (32), tandis que ses deuxième et suivants niveaux prédéterminés de remplissage de groupe (PV2, ...) sont égaux audit même nombre (32).

6. Procédé selon la revendication 1, caractérisé en ce que dans chacun desdits groupes (S1/SN), les cellules de données sont classées selon leur identificateur de cellule, et en ce qu'après le stockage de ladite cellule de données (DC) dans ladite position mémoire libre, les cellules de données du groupe correspondant sont reclassées selon leurs identificateurs de cellule.

7. Procédé selon la revendication 1, caractérisé en ce qu'une liste liée est associée à chacun desdits groupes (S1/SN) indiquant l'ordre numérique des cellules de données qui y sont stockées, et en ce que ladite liste liée est mise à jour après le stockage de ladite cellule de données (DC) dans ladite position mémoire libre.

**8.** Dispositif de contrôle de stockage en mémoire pour stocker des cellules de données (DC) dans des positions mémoire (ML) d'une mémoire (MEM), dans lequel lesdites positions mémoire sont regroupées dans des groupes distincts prédéterminés (S1/SN) avec des adresses de groupe respectives (SA1/SAN), lesdites cellules de données (DC) étant identifiées par des identificateurs de cellule respectifs (ID) auxquels correspondent des adresses respectives dudit groupe d'adresses, caractérisé en ce que ledit dispositif de contrôle de stockage en mémoire inclut :

-   des moyens de classement de groupes (SOR) pour indiquer un ordre cyclique auxdits groupes (S1/SN);

et de façon à stocker une cellule de données (DC) inclut en outre :

-   des premiers moyens d'allocation (ATR) pour allouer une adresse correspondante (SAM) desdites adresses de groupe (SA1/SAN) à l'identificateur de cellule (ID) de ladite cellule de données (DC) et
-   des deuxièmes moyens d'allocation pour allouer auxdits groupes (S1/SN) dans ledit ordre cyclique, en commençant par ledit groupe (SM) avec ladite seule adresse de groupe correspondante (SAM), des niveaux prédéterminés respectifs de remplissage (PV1, PV2, ...); et inclut en outre pour effectuer un processus itératif d'étude sur lesdits groupes dans ledit ordre cyclique en commençant ainsi par ledit seul groupe (SM) :
-   des moyens de comparaison (COMP) pour comparer un niveau effectif de remplissage d'un groupe étudié à son niveau prédéterminé de remplissage de groupe, fournissant ainsi un résultat, et pour décider en fonction dudit résultat si ladite cellule de données doit être stockée dans une position mémoire libre de ce groupe ou si un groupe suivant doit être étudié au cours d'une phase suivante dudit processus; et

en ce que lesdits niveaux prédéterminés de remplissage de groupe sont déterminés de façon à diminuer la probabilité après le stockage de ladite cellule de données (DC), dont l'identificateur de cellule (ID) correspond audit seul groupe (SM) avec ladite seule adresse de groupe (SAM), dans une position mémoire libre dudit groupe (SM).

**9.** Dispositif de contrôle de stockage en mémoire selon la revendication 8, caractérisé en ce que lesdits premiers moyens d'allocation (ATR) se composent d'un traducteur d'identificateurs (ATR) pour traduire les identificateurs de cellule desdites cellules de données en lesdites adresses de groupe.

**10.** Dispositif de contrôle de stockage en mémoire selon la revendication 8, caractérisé en ce que ledit dispositif de contrôle de stockage en mémoire inclut en outre :

-   un registre de groupe (SR) pour stocker ladite adresse de groupe du groupe étudié; et
-   des moyens de vecteur (VECT) pour prévoir ledit niveau prédéterminé de remplissage de groupe alloué audit groupe étudié à sa sortie; et
-   des moyens de mesure (MEAS) dans lesquels entre ladite adresse de groupe dudit groupe étudié et pour prévoir ledit niveau effectif de remplissage dudit groupe étudié, et

en ce que lesdits moyens de comparaison (COMP) indiquent si ledit niveau prédéterminé de remplissage de groupe est supérieur audit niveau effectif de remplissage de groupe ou non;
et en ce que ledit dispositif de contrôle de stockage en mémoire inclut en outre :

-   des moyens d'incrémentation (INCR) pour adapter, sous le contrôle de ladite sortie des moyens de comparaison, le contenu dudit registre de groupe (SR); et
-   des moyens de stockage (STO) pour stocker, sous le contrôle de ladite sortie de comparateur, ladite cellule de données (DC).

**11.** Dispositif de contrôle de stockage en mémoire selon la revendication 9, caractérisé en ce que ledit traducteur d'identificateurs (ATR) inclut un dispositif de mémoire dans lequel les adresses de groupe desdits groupes (S1/SN) sont stockées.

**12.** Dispositif de contrôle de stockage en mémoire selon la revendication 9, caractérisé en ce que ledit traducteur d'identificateurs (ATR) inclut des moyens de traitement effectuant une fonction prédéterminée sur ledit identificateur de cellule (ID) de façon à obtenir ladite adresse de groupe.

EP 0 615 189 B1

S1 S2 --------- SN

ML

MEM

DC

| ID | INF |

STO

ATR

SR

MEAS

COMP

INIT

IR

VECT

INCR

SOR